# EUROPÄISCHE PATENTSCHRIFT

(11) **EP 2 532 883 B1**
(45) Veröffentlichungstag und Bekanntmachung des Hinweises auf die Patenterteilung: **14.10.2015**
(21) Anmeldenummer: 12004217.1
(22) Anmeldetag: 01.06.2012
(51) Int. Cl.: F03D 1/06, F03D 11/00

(54) **Windenergieanlagenbauteil mit einer in ein Laminat eingebetteten elektrischen Leitung**
Wind turbine component with an electric cable embedded in a laminate
Composant d'éolienne avec un câble électrique incorporé dans un laminage

(30) Priorität: 10.06.2011 DE 102011105228
(43) Veröffentlichungstag der Anmeldung: 12.12.2012
(73) Patentinhaber: Nordex Energy GmbH, 22419 Hamburg (DE)
(72) Erfinder: Rindt, Philipp, 18057 Rostock (DE); Austinat, Dirk, 17126 Jarmen (DE)
(74) Vertreter: Hauck Patentanwaltspartnerschaft mbB

(56) Entgegenhaltungen:
- EP-A1- 2 110 552
- WO-A2-2010/034283
- DE-A1-102009 003 405
- US-A1- 2010 260 612

## Beschreibung

Die Erfindung betrifft ein Windenergieanlagenbauteil mit einem Laminat aus einem Fasermaterial und Kunststoff und einer in das Laminat eingebetteten elektrischen Leitung. Bei dem Windenergieanlagenbauteil kann es sich beispielsweise um ein Rotorblatt oder um einen Teil eines Rotorblatts handeln. Solche Bauteile werden häufig aus faserverstärkten Kunststoffen gefertigt und weisen typischerweise sehr große Abmessungen auf. Außerdem sind sie im Betrieb sehr großen und ständig wechselnden Belastungen ausgesetzt. Daher müssen elektrische Leitungen, die mit einem solchen Bauteil verbunden werden sollen, dauerhaft und sicher an dem Bauteil befestigt werden. Dies erfolgt häufig über eine große Länge, beispielsweise bei einem Blitzschutzkabel, das sich von der Blattspitze bis zur Blattwurzel eines Rotorblatts erstreckt.

Druckschrift US 2010/0260612 A1 zeigt ein Windenergieanlagenrotorblatt mit einer Tragstruktur aus Röhren, die in einem Ausführungsbeispiel aus Kohlenstofffasem bestehen. Die Röhren werden von Füllelementen, die beispielsweise aus leichtgewichtigem Holz bestehen, in ihrer Position gehalten.

Aus der Druckschrift EP 2 110 552 A1 ist ein Rotorblatt für eine Windenergieanlage mit integriertem Blitzschutzkabel bekannt geworden. Das Blitzschutzkabel ist ein Flachkabel mit rechteckigem Querschnitt, das bei der Herstellung des Rotorblatts in das Laminat eingebettet wird. Dabei kommt ein Vakuum-Injektionsverfahren zum Einsatz, mit dem das flüssige Kunststoffmaterial nach Anordnen des Blitzschutzkabels zwischen unterschiedlichen Schichten des Fasermaterials eingebracht wird.

Aus der Druckschrift WO 2005/050808 A1 ist ein Bauteil zum Potentialausgleich zwischen elektrisch leitfähigen Komponenten eines Windenergieanlagenrotorblatts bekannt geworden. Durch den Potentialausgleich soll ein elektrischer Überschlag zwischen den Komponenten insbesondere bei einem Blitzschlag vermieden werden. Das Bauteil zum Potentialausgleich besteht aus einer Kontakt vermittelnden Schicht, auf der ein metallischer Leiter angeordnet ist. Oberhalb des metallischen Leiters wird eine Deckschicht aus einem elektrisch leitfähigen Fasermaterial, das mit Harz durchtränkt sein kann, angeordnet. Zwischen der Deckschicht und einer seitlichen Fläche des metallischen Leiters kann sich dabei ein Hohlraum bilden. In der Druckschrift wird vorgeschlagen, diesen Hohlraum mit Harz auszufüllen.

Davon ausgehend ist es die Aufgabe der Erfindung, ein Windenergieanlagenbauteil mit einem Laminat aus einem Fasermaterial und Kunststoff und einer in das Laminat eingebetteten elektrischen Leitung zur Verfügung zu stellen, bei dem elektrische Leitungen beliebigen Querschnitts mit einem einfachen bzw. weniger fehleranfälligen Herstellungsverfahren sicher und dauerhaft fixiert werden können, sowie ein Herstellungsverfahren für ein solches Windenergieanlagenbauteil.

Diese Aufgabe wird gelöst durch das Windenergieanlagenbauteil mit den Merkmalen des Anspruchs 1. Vorteilhafte Ausgestaltungen sind in den sich anschließenden Unteransprüchen angegeben.

Das Windenergieanlagenbauteil hat ein Laminat aus einem Fasermaterial und Kunststoff und eine in das Laminat eingebettete elektrische Leitung, wobei an einer Seitenfläche der elektrischen Leitung ein Profil angeordnet ist, das einer Bildung eines Hohlraums oder Kunststoffnests zwischen der Seitenfläche und einer eine Oberseite der elektrischen Leitung überdeckenden Fasermateriallage bei der Fertigung des Laminats entgegenwirkt.

Die Erfindung beruht auf der Erkenntnis, dass bei dem eingangs geschilderten Herstellungsverfahren im Bereich einer eingebetteten elektrischen Leitung Infusionsfehler auftreten können, die einer aufwendigen Nacharbeitung bedürfen. Insbesondere können an einer Seitenfläche der elektrischen Leitung Hohlräume oder Kunststoffnester entstehen, wenn eine die elektrische Leitung überdeckende Fasermateriallage der Querschnittsgeometrie des Kabels nicht vollständig folgen kann. In diesem Fall entsteht zwischen der Seitenfläche der elektrischen Leitung und der diese überdeckenden Fasermateriallage ein Freiraum, der entweder vollständig mit dem Kunststoff gefüllt wird und so ein Kunststoffnest bildet, oder der beim Injizieren des Kunststoffs nicht vollständig gefüllt wird, sodass nach dem Aushärten des Kunststoffs ein Hohlraum mit einem Lufteinschluss verbleibt. Beides ist für eine dauerhafte Fixierung der elektrischen Leitung nicht optimal. Insbesondere luftgefüllte Hohlräume sind kritisch, weil sich in an den Hohlraum angrenzenden Schichten unter dynamischer Belastung Risse bilden können, die die Stabilität des Bauteils und die Fixierung der Leitung gefährden. Daher müssen entsprechende Mängel der Einbettung des Kabels nach dem Aushärten des Harzes unter hohem Aufwand manuell behoben werden, sofern dies bei der häufig eingeschränkten Zugänglichkeit der entsprechenden Bereiche des Windenergieanlagenbauteils überhaupt noch möglich ist. Ein anderer Fertigungsmangel kann auftreten, wenn eine die elektrische Leitung überdeckende Lage Fasermaterial ganz oder teilweise unter die Leitung gelangt. Dies kann sowohl beim Einlegen der jeweiligen Faserlagen in eine Form als auch bei der Evakuierung der Form bei der Kunststoffinjektion passieren. Es bildet sich dann eine Falte oder Welle im Fasermaterial, die ebenfalls zu Problemen führen kann.

Bei der Erfindung ist die elektrische Leitung in ein Laminat eingebettet. Eingebettet heißt, dass die elektrische Leitung im Querschnitt allseitig von dem Laminat umschlossen ist. Einbezogen sind Anordnungen, bei denen zusätzlich zu dem Kabel sonstige Bestandteile des Windenergieanlagenbauteils, etwa bestehend aus Balsaholz oder einem anderen Füllmaterial, mit in das Laminat eingebettet sind. In diesen Fällen kann die elektrische Leitung beispielsweise auf einem solchen sonstigen Material aufliegen und gemeinsam mit diesem in das Laminat eingebettet sein.

Das Fasermaterial weist Fasern auf, die in Lagen angeordnet sind. Die Anordnung der Fasern innerhalb der einzelnen Lagen ist beliebig. Sie kann beispielsweise unidirektional, bidirektional oder ungeordnet sein. Häufig werden Glasfasern verwendet. Ebenfalls bekannt ist die Verwendung von Kohlenstofffasern. Auch eine Verwendung von sonstigen Kunststofffasern ist denkbar. Das Laminat weist außerdem einen Kunststoff auf, in den die Fasern eingebettet sind. Bei dem Kunststoff kann es sich beispielsweise um Polyesterharz oder Epoxidharz oder ein sonstiges in geeigneter Weise aushärtendes Kunststoffinaterial handeln.

Die elektrische Leitung kann beispielsweise eine Blitzschutzleitung, eine Versorgungsleitung oder eine Signalleitung sein. Sie kann einen beliebigen Querschnitt aufweisen und kann eine Abschirmung und/oder Isolierung aufweisen. Die elektrische Leitung kann beispielsweise einen Durchmesser von 6 mm, 8 mm, 10 mm, 15 mm oder mehr aufweisen. Sie kann auch einen rechteckigen Querschnitt aufweisen, beispielsweise mit einer Höhe von 6 mm, 8 mm, 10 mm oder mehr. Die elektrische Leitung weist eine Seitenfläche auf. Diese kann eben oder gekrümmt sein. Beispielsweise kann die Seitenfläche eine ebene Seitenfläche sein, die von einer kurzen Seite eines Rechtecks einer im Querschnitt rechteckigen Leitung gebildet ist. Die Seitenfläche kann auch gekrümmt sein, beispielsweise bei einem kreisrunden Kabel, wobei ein Abschnitt des Kreisumfangs die Seitenfläche bildet. Die elektrische Leitung weist außerdem eine Oberseite auf, die ebenfalls eben oder gekrümmt sein kann. Die Oberseite kann von einem an die Seitenfläche angrenzenden Abschnitt der Oberfläche der elektrischen Leitung gebildet sein.

An der Seitenfläche der elektrischen Leitung ist ein Profil angeordnet. Das Profil weist einen definierten Querschnitt auf und erstreckt sich über eine im Vergleich zu den Abmessungen des Querschnitts große Länge, insbesondere entsprechend der gesamten in das Laminat eingebetteten Länge der elektrischen Leitung oder eines Großteils davon.

Bei der Fertigung des Laminats wirkt das Profil einer Bildung eines Hohlraums oder Kunststoffnests zwischen der Seitenfläche und einer eine Oberseite der elektrischen Leitung überdeckenden Fasermateriallage entgegen. Hierzu kann das Profil im Querschnitt so bemessen sein, dass es sich im Bereich der Seitenfläche unmittelbar an die elektrische Leitung "anschmiegt". Es kann sich jedoch auch in einem Abstand von der Seitenfläche befinden, wobei ein zwischen dem Profil und der Seitenfläche verbleibender Freiraum jedoch so klein ist, dass er in der Regel problemlos mit dem Kunststoff gefüllt wird. Der Querschnitt des Profils ist so auf den Querschnitt der elektrischen Leitung abgestimmt, dass zwischen beiden allenfalls ein kleiner Freiraum verbleibt. Klein bedeutet dabei, dass der Freiraum im Querschnitt eine Fläche aufweist, die kleiner als die Querschnittsfläche der elektrischen Leitung ist. Sie kann beispielsweise 20%, 10%, 5% oder weniger der Querschnittsfläche des Kabels betragen. Der Querschnitt des Profils kann so gewählt sein, dass er einen Freiraum zwischen der Seitenfläche der elektrischen Leitung und einer unterhalb der elektrischen Leitung befindlichen Materiallage ausfüllt, im Wesentlichen ausfüllt oder zumindest teilweise ausfüllt.

Der Querschnitt des Profils kann so gewählt sein, dass eine die Oberseite der elektrischen Leitung überdeckende Fasermateriallage an der Oberseite der elektrischen Leitung und am Profil anliegt. Auch an einer unterhalb der elektrischen Leitung befindlichen Materiallage kann die die Oberseite der elektrischen Leitung überdeckende Lage Fasermaterial anliegen, und zwar seitlich des Profils. Durch geeignete Wahl des Querschnitts des Profils ist all dies möglich, ohne dass die die elektrische Leitung überdeckende Fasermateriallage eine Krümmung aufweisen muss, die diese Fasermateriallage bei der Fertigung des Laminats nicht ohne Weiteres annehmen kann.

Die Oberseite der elektrischen Leitung kann von einer oder mehreren Lagen Fasermaterial überdeckt sein. Eine einzige Lage Fasermaterial oberhalb der elektrischen Leitung kann für eine dauerhafte und sichere Fixierung ausreichend sein.

Durch die Erfindung wird verhindert, dass an der Seitenfläche der elektrischen Leitung bei der Fertigung des Laminats ein Hohlraum oder ein Harznest entsteht. Dadurch wird eine ordnungsgemäße und fehlerfreie Einbettung der elektrischen Leitung in das Laminat gewährleistet. Der Herstellungsprozess wird dadurch zuverlässiger und aufwendige Nacharbeiten können entfallen.

In einer Ausgestaltung weist die elektrische Leitung eine Unterseite auf, die an einer in einer Umgebung der elektrischen Leitung im Wesentlichen ebenen Materiallage anliegt. Bei der ebenen Materiallage kann es sich insbesondere um eine Lage Fasermaterial handeln. Die ebene Materiallage kann auch ein sonstiger Bestandteil des Windenergieanlagenbauteils sein, etwa ein Füllmaterial aus Balsaholz oder einem geschäumten Material, das eine im Wesentlichen ebene Oberfläche aufweist. Die Unterseite der elektrischen Leitung kann der Oberseite der elektrischen Leitung gegenüberliegen. Die Umgebung der elektrischen Leitung kann sich von einer Mitte der elektrischen Leitung in Richtung der ebenen Materiallage bis zu der Seitenfläche der elektrischen Leitung und darüber hinaus erstrecken. Die Umgebung kann beispielsweise eine Breite aufweisen, die dem Doppelten eines Durchmessers der elektrischen Leitung entspricht oder mehr. In dieser Ausgestaltung kann das Profil mit einer Unterseite auf der im Wesentlichen ebenen Materiallage aufliegen und sich von einem Abstand von der elektrischen Leitung bis an die Seitenfläche der elektrischen Leitung heran erstrecken. Dadurch wirkt das Profil der Hohlraum- und Kunststoffnestbildung in der gewünschten Weise entgegen, wenn die elektrische Leitung auf einer ebenen Fläche aufliegt. Bei dieser Anordnung ist die Gefahr einer Hohlraum- oder Kunststoffnestbildung insbesondere in Verbindung mit im Querschnitt kreisrunden elektrischen Leitungen besonders groß.

Bei der Erfindung ist das Profil im Querschnitt keil- oder rampenförmig. Der Keil oder die Rampe wird von zwei Flächen, die eben sein können, gebildet, die unter einem spitzen Winkel aneinandergrenzen. Eine untere dieser beiden Flächen kann an einer Materiallage anliegen, an der auch eine Unterseite der elektrischen Leitung anliegt. Die andere dieser Flächen bildet eine zu der elektrischen Leitung hin ansteigende Fläche. Sie kann von der die Oberseite der elektrischen Leitung überdeckenden Fasermateriallage überdeckt sein. Insbesondere kann diese Fasermateriallage an dieser Fläche anliegen.

In einer Ausgestaltung besteht das Profil aus einem biegsamen Material. Grundsätzlich kann das Profil auch aus einem relativ steifen Material bestehen, etwa aus Holz in Form einer Profilleiste. Ein biegsames Material kann einerseits die Handhabung auch längerer Profile vereinfachen, weil diese beispielsweise aufgerollt werden können. Andererseits begünstigt eine Biegsamkeit oder Elastizität des Materials ein "Anschmiegen" des Profils an die Seitenfläche der elektrischen Leitung.

In einer Ausgestaltung besteht das Profil aus einem geschäumten Material. Insbesondere kann es aus einem geschäumten Kunststoffmaterial bestehen, zum Beispiel aus einem geschlossenporigen Schaumstoff. Derartige Profile weisen ein geringes Gewicht auf. Außerdem werden sie bei der Injektion des Kunststoffs nicht von diesem durchtränkt, was weiter zu einem geringen Gewicht des Windenergieanlagenbauteils beiträgt. Außerdem weisen sie eine hohe Elastizität und Komprimierbarkeit auf, die zum Ausfüllen von Freiräumen zwischen der elektrischen Leitung und angrenzenden Materiallagen besonders geeignet ist.

In einer Ausgestaltung weist das Profil eine Höhe von 50% oder mehr einer Höhe der elektrischen Leitung auf. Beispielsweise erstreckt sich das Profil ausgehend von einer ebenen Materiallage, auf der die elektrische Leitung mit einer Unterseite aufliegt, bis zu einer Höhe von 50%, 75%, 90% oder mehr der Höhe der elektrischen Leitung. Das Profil kann sich genau oder mindestens bis in eine Höhe erstrecken, in der die elektrische Leitung ihre größte Breite aufweist. Im Falle einer kreisrunden elektrischen Leitung kann sich das Profil bis zur Höhe des Mittelpunkts der elektrischen Leitung oder darüber hinaus erstrecken. Durch die genannten Höhen des Profils wird der Bildung von Hohlräumen oder Kunststoffnestern an den Seitenflächen der elektrischen Leitung in vielen Fällen bereits ausreichend entgegengewirkt.

In einer Ausgestaltung ist die elektrische Leitung im Querschnitt kreisförmig und das Profil weist im Querschnitt einen konkaven Abschnitt auf, der an die Seitenfläche der elektrischen Leitung angrenzt und dessen Krümmungsradius dem Radius der elektrischen Leitung entspricht. Der konkave Abschnitt kann einer Spitze eines den übrigen Querschnitt bildenden Keils oder einer den übrigen Querschnitt bildenden Rampe gegenüberliegen. Der konkave Abschnitt kann an der Seitenfläche der elektrischen Leitung anliegen. Dadurch wird eine Hohlraum- oder Kunststoffnestbildung insbesondere zwischen dem konkaven Abschnitt des Profils und der elektrischen Leitung zuverlässig verhindert.

In einer Ausgestaltung weist die elektrische Leitung einen rechteckigen Querschnitt auf und das Profil ist im Querschnitt dreieckig. Eine Seitenfläche des Profils kann an eine Seitenfläche der elektrischen Leitung angrenzen. Eine weitere Seitenfläche des Profils kann an einer ebenen Materiallage anliegen, an der auch eine Unterseite der elektrischen Leitung anliegt. Zwischen den beiden genannten Seiten des Profils kann ein rechter Winkel ausgebildet sein, sodass das Profil den Querschnitt eines rechtwinkligen Dreiecks aufweist.

In einer Ausgestaltung ist an einer der Seitenfläche gegenüberliegenden weiteren Seitenfläche der elektrischen Leitung ein weiteres Profil angeordnet, das einer Bildung eines Hohlraums oder Kunststoffnests zwischen der weiteren Seitenfläche und der die Oberseite überdeckenden Fasermateriallage bei der Fertigung des Laminats entgegenwirkt. Es sind also an zwei einander gegenüberliegenden Seitenflächen der elektrischen Leitung Profile angeordnet, die die bereits erläuterte Wirkung haben. Im Falle mehrerer benachbart angeordneter elektrischer Leitungen kann es sich bei der weiteren Seitenfläche auch um eine Seitenfläche einer weiteren elektrischen Leitung handeln, die auf der der Seitenfläche gegenüber liegenden Seite der elektrischen Leitung angeordnet ist. In jedem Fall wird in dieser Ausgestaltung auf beiden Seiten einer elektrischen Leitung bzw. auf beiden Seiten einer Gruppe benachbarter elektrischer Leitungen einer Hohlraum- oder Kunststoffnestbildung entgegengewirkt.

In einer Ausgestaltung ist neben der elektrischen Leitung mindestens eine weitere elektrische Leitung in das Laminat eingebettet, wobei zwischen zwei der elektrischen Leitungen ein weiteres Profil angeordnet ist, das einer Bildung von Hohlräumen oder Kunststoffnestern zwischen diesen elektrischen Leitungen und/oder zwischen einer dieser Leitungen und einer die Oberseite überdeckenden Fasermateriallage bei der Fertigung des Laminats entgegenwirkt. Es wird also auch ein anderenfalls möglicherweise entstehender Hohlraum oder ein Kunststoffnest zwischen zwei benachbarten elektrischen Leitungen vermieden.

In einer Ausgestaltung weist das weitere, zwischen den beiden elektrischen Leitungen angeordnete Profil im Querschnitt zwei einander gegenüberliegende, konkav gekrümmte Seitenkanten auf. Das Profil kann eine rechteckige Grundform aufweisen, wobei zwei Seiten des Rechtecks von den einander gegenüberliegenden, konkav gekrümmten Seitenkanten gebildet werden. In Verbindung mit kreisrunden elektrischen Leitungen können die Krümmungsradien der konkav gekrümmten Seitenkanten an die Radien der elektrischen Leitungen angepasst sein, sodass das Profil an den beiden benachbarten Seitenflächen der elektrischen Leitungen optimal anliegt. Dadurch wird einer Hohlraum- oder Kunststoffnestbildung zwischen den beiden benachbarten Leitungen optimal entgegengewirkt.

In einer Ausgestaltung ist das Windenergieanlagenbauteil ein Rotorblatt oder ein Teil eines Rotorblatts. Beispielsweise kann es sich um eine Ober- oder Unterschale eines aus zwei Halbschalen zusammengesetzten Rotorblatts oder einen zwischen diesen Halbschalen in Längsrichtung des Rotorblatts verlaufenden Steg handeln. In beiden Fällen handelt es sich um Bauteile, an denen eine elektrische Leitung gegebenenfalls über eine große Länge sicher fixiert werden muss und die aus faserverstärktem Kunststoff aufgebaut sind. Sie eignen sich daher besonders für die Erfindung.

Die oben angegebene Aufgabe wird ebenfalls gelöst durch das Verfahren mit den Merkmalen des Anspruchs 13. Das Verfahren dient zur Herstellung eines Windenergieanlagenbauteils und weist die folgenden Schritte auf:
- Einlegen einer Anzahl unterer Fasermateriallagen in eine Form,
- Auflegen einer elektrischen Leitung auf eine Materiallage,
- Auflegen einer weiteren Fasermateriallage, die eine Oberseite der elektrischen Leitung überdeckt,
- Injizieren eines Kunststoffs in einem Vakuum-Injektionsverfahren,
- Aushärten des Kunststoffs,
- Entnehmen des Windenergieanlagenbauteils aus der Form, wobei
- vor dem Auflegen der weiteren Fasermateriallage, die die Oberseite der elektrischen Leitung überdeckt, und vor dem Injizieren des Kunststoffs neben einer Seitenfläche der elektrischen Leitung ein im Querschnitt keil- oder rampenförmiges Profil auf die Materiallage aufgelegt wird, das einer Bildung eines Hohlraums oder Kunststoffnests zwischen der Seitenfläche und der weiteren Lage Fasermaterial beim Injizieren und Aushärten des Kunststoffs entgegenwirkt.

Zur Erläuterung der Verfahrensmerkmale wird auf die vorstehenden Erläuterungen zu dem Windenergieanlagenbauteil verwiesen, das mit dem Verfahren hergestellt werden kann. Die Erläuterungen zu den verwendeten Materialien und sonstigen Merkmalen sowie zu den besonderen Vorteilen des Windenergieanlagenbauteils gelten für das Verfahren entsprechend.

Unter Vakuum-Injektionsveufahren werden Verfahren verstanden, bei denen noch nicht mit dem Kunststoff durchtränkte Fasermaterialien in eine Form eingelegt werden. Die Form entspricht in der Regel einer äußeren Kontur des zu fertigenden Bauteils. Sie wird nach dem Anordnen des Fasermaterials, der elektrischen Leitung und gegebenenfalls weiterer in das Laminat einzubettender Bestandteile luftdicht verschlossen, beispielsweise durch Auflegen einer Folie, die an den Rändern der Form dichtend befestigt wird. Das flüssige Kunststoffmaterial gelangt durch Kanäle und ggfs. weitere Fließhilfen durch Erzeugen eines Vakuums bzw. starken Unterdrucks innerhalb der Form in das Innere der Form und verteilt sich dabei idealerweise blasenfrei und vollständig, sodass das Fasermaterial vollständig durchtränkt wird und etwaige Hohlräume vollständig mit Harz gefüllt werden.

Bei der Erfindung wird neben einer Seitenfläche der elektrischen Leitung ein Profil auf eine Materiallage aufgelegt, was in der bereits erläuterten Weise einer Bildung eines Hohlraums oder Kunststoffnests entgegenwirkt. Hierzu wird, ebenso wie zu den Eigenschaften des Profils sowie seiner genauen Anordnung in Bezug auf die elektrische Leitung und/oder die unterschiedlichen Lagen des Fasermaterials, auf die vorstehenden Erläuterungen verwiesen. Bei der Materiallage kann es sich insbesondere um eine der unteren Fasermateriallagen handeln.

Die Erfindung wird nachfolgend anhand von sechs Figuren näher erläutert. Es zeigen:
- Fig. 1: ein erfindungsgemäßes Rotorblatt einer Windenergieanlage in einer vereinfachten Draufsicht,
- Fig. 2: einen Querschnitt durch das Rotorblatt der Figur 1 entlang der mit A-A bezeichneten Linie in einer schematischen, vereinfachten Darstellung,
- Fig. 3: eine erfindungsgemäß in ein Laminat eingebettete elektrische Leitung in einer schematischen, vereinfachten Querschnittsdarstellung,
- Fig. 4: drei erfindungsgemäß in ein Laminat eingebettete elektrische Leitungen in einer schematischen, vereinfachten Querschnittsdarstellung,
- Fig. 5: eine erfindungsgemäß in ein Laminat eingebettete elektrische Leitung mit rechteckigem Querschnitt in einer schematischen, vereinfachten Querschnittsdarstellung,
- Fig. 6: ein Laminat mit einer eingebetteten elektrischen Leitung nach dem Stand der Technik.

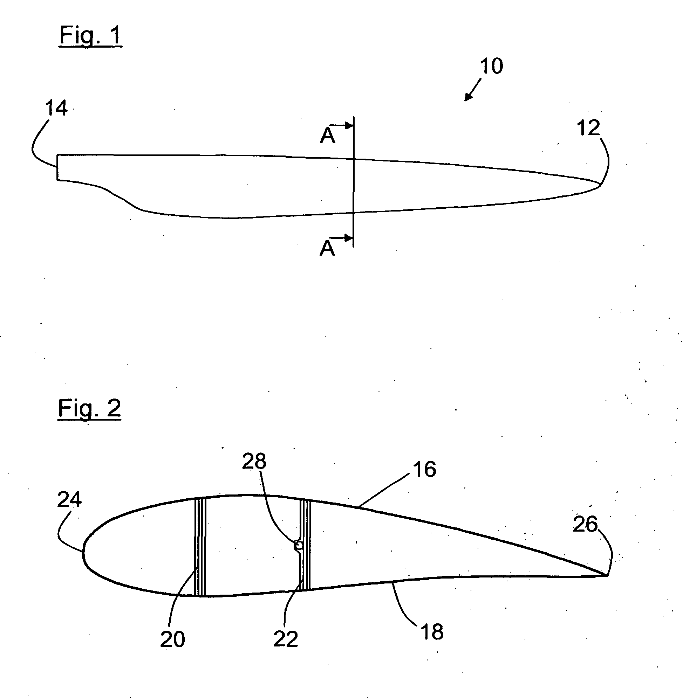

Figur 1 zeigt als Beispiel für ein Windenergieanlagenbauteil ein Rotorblatt 10 mit einer Blattspitze 12 und einer Blattwurzel 14. Das Rotorblatt weist ein aerodynamisches Profil auf, das in der Fig. 2 im Querschnitt dargestellt ist.

In der Fig. 2 erkennt man, dass das Rotorblatt aus Fig. 1 aus einer Oberschale 16 und einer Unterschale 18 zusammengefügt ist. Oberschale 16 und Unterschale 18 sind jeweils in einem Vakuum-Injektionsverfahren hergestellt und anschließend entlang ihrer Nasen- und Hinterkanten miteinander verklebt worden.

Eine Tragstruktur für diese Konstruktion weist zwei in Längsrichtung des Rotorblatts 10 verlaufende Stege 20, 22 auf. Der Steg 20 ist weiter vom, zur Profilnasenkante 24 hin angeordnet. Der Steg 22 befindet sich in Strömungsrichtung betrachtet weiter hinten, näher an der Profilhinterkante 26.

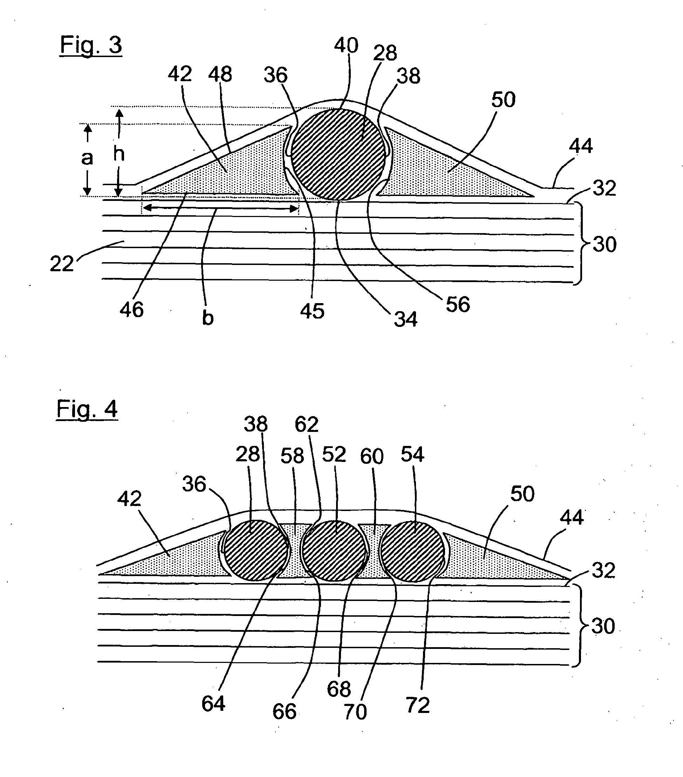

Die Oberschale 16 und die Unterschale 18 bestehen im Wesentlichen, ebenso wie die Stege 20 und 22, aus einem Laminat, das eine Vielzahl von Lagen eines Fasermaterials aufweist, die in einen Kunststoff eingebettet sind. Für die Stege 20, 22 ist dieser Aufbau des Laminats durch mehrere benachbarte Linien angedeutet. In das Laminat des hinteren Stegs 22 ist eine elektrische Leitung 28 eingebettet, wie in der Figur 3 vergrößert dargestellt.

Der in der Figur 3 sichtbare Ausschnitt zeigt einen Teil des Stegs 22 mit einer elektrischen Leitung 28 im Querschnitt. Der Steg 22 weist im gezeigten Ausschnitt eine Anzahl unterer Fasermateriallagen 30 auf, die aneinander anliegen. Die Materiallage 32, die oberste der Fasermateriallagen 30, ist in einer Umgebung der elektrischen Leitung 28 im Wesentlichen eben und die elektrische Leitung 28 liegt mit einer Unterseite 34 an der Materiallage 32 an.

Bei der elektrischen Leitung 28 handelt es sich um ein Blitzschutzkabel mit kreisrundem Querschnitt. Der Durchmesser beträgt ca. 16 mm. Die elektrische Leitung 28 weist zwei einander gegenüberliegende Seitenflächen 36 und 38 sowie eine Oberseite 40 auf. Wegen des kreisrunden Querschnitts sind sowohl die Seitenflächen 36, 38 als auch die Unterseite 34 und die Oberseite 40 der elektrischen Leitung 28 gekrümmt. Sie bilden jeweils eine langgestreckte Teilfläche eines Kreiszylindermantels.

An der Seitenfläche 36 ist ein Profil 42 angeordnet. Dieses wirkt der Bildung eines Hohlraums oder Kunststoffnests zwischen der Seitenfläche 36 und einer die Oberseite 40 der elektrischen Leitung 28 überdeckenden Fasermateriallage 44 entgegen. Hierzu ist das Profil 42 im Querschnitt keil- oder rampenförmig mit einer unteren, ebenen Fläche 46, die an der Materiallage 32 anliegt, und einer in einem spitzen Winkel hierzu angeordneten, oberen ebenen Fläche 48. Die die Oberseite 40 der elektrischen Leitung 28 überdeckende Fasermateriallage 44 liegt an dieser oberen Fläche 48 an und erstreckt sich seitlich über das Profil 42 hinaus, wo sie an der Materiallage 32 anliegt. Die elektrische Leitung 28 ist somit vollständig von der Materiallage 32 und der die Oberseite 40 der elektrischen Leitung 28 überdeckenden Fasermateriallage 44 eingeschlossen und in das Laminat eingebettet. Gleiches gilt für das an der Seitenfläche 36 angeordnete Profil 42.

Das Profil 42 weist im Querschnitt einen konkaven Abschnitt 45 auf, der an die Seitenfläche 36 der elektrischen Leitung 28 angrenzt und dessen Krümmungsradius dem Radius der elektrischen Leitung 28 entspricht. Das weitere Profil 50 weist entsprechend im Querschnitt einen konkaven Abschnitt 56 auf, der an die weitere Seitenfläche 38 der elektrischen Leitung 28 angrenzt.

An der der Seitenfläche 36 der elektrischen Leitung 28 gegenüber liegenden, Seitenfläche 38 ist ein weiteres Profil 50 angeordnet, das im Querschnitt spiegelsymmetrisch zu dem Profil 42 aufgebaut ist.

Das Profil 48 weist eine Höhe a auf, die im Beispiel senkrecht zu der Ebene der Materiallage 32 gemessen wird. Sie ist kleiner als die dem Durchmesser der elektrischen Leitung 28 entsprechende Höhe h der elektrischen Leitung 28, jedoch größer als 50% dieser Höhe h. Die Breite b des Profils 42, gemessen in Richtung der Materiallage 32 und senkrecht zur Längsrichtung der elektrischen Leitung 28 und des Profils 42 beträgt etwa das Doppelte der Höhe a des Profils 42.

Die gesamte dargestellte Anordnung ist in einem Vakuum-Injektionsverfahren mit einem Kunststoff durchtränkt worden, wobei zwischen den im Einzelnen dargestellten Komponenten keinerlei die Stabilität der Anordnung gefährdende Hohlräume verbleiben.

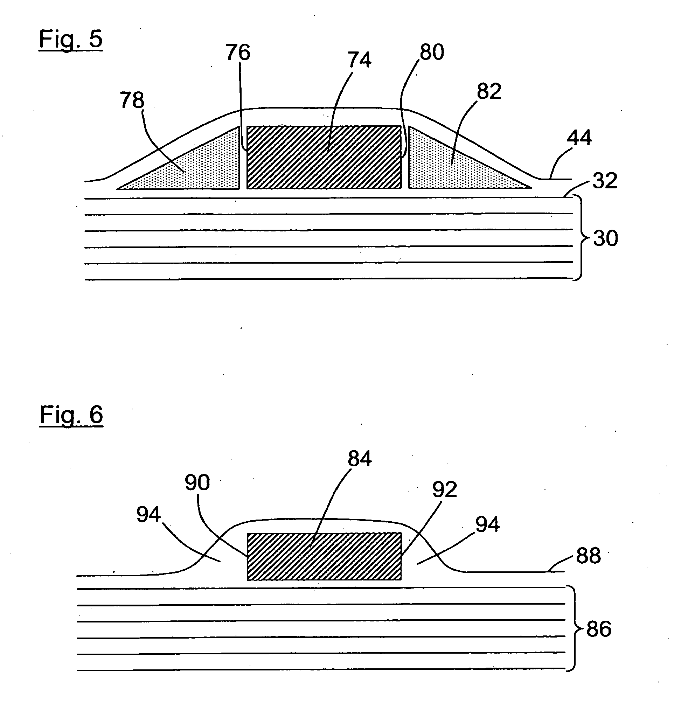

In der Figur 4 ist ein weiteres Ausführungsbeispiel dargestellt, wobei hier ebenso wie in der Figur 5 für sich entsprechende Komponenten dieselben Bezugszeichen wie in der Figur 3 verwendet werden. Das Ausführungsbeispiel der Fig. 4 unterscheidet sich von demjenigen der Figur 3 dadurch, dass neben der elektrischen Leitung 28 zwei weitere elektrische Leitungen 52 und 54 angeordnet sind. An der Seitenfläche 36 der elektrischen Leitung 28 ist in der bereits beschriebenen Weise ein Profil 42 angeordnet. Auf der der Seitenfläche 36 gegenüberliegenden Seite der elektrischen Leitung 28 befinden sich zwei weitere elektrische Leitungen 52, 54. Zwischen der elektrischen Leitung 28 und der weiteren elektrischen Leitung 52 befindet sich ein weiteres Profil 58, das im Querschnitt eine rechteckige Grundform aufweist, wobei zwei einander gegenüberliegende Seiten des Rechtecks, die an Seitenflächen 38 und 62 der elektrischen Leitungen 28 bzw. 52 angrenzen, von konkav gekrümmten Flächen 64, 66 gebildet sind.

Zwischen den weiteren elektrischen Leitungen 52, 54 ist ein weiteres Profil 60 angeordnet, das den gleichen Querschnitt aufweist wie das Profil 58. Es grenzt an eine weitere Seitenfläche 68 der elektrischen Leitung 52 und eine Seitenfläche 70 der weiteren elektrischen Leitung 54 an. An einer weiteren Seitenfläche 72 der elektrischen Leitung 54 ist ein weiteres Profil 50 angeordnet, das entsprechend dem weiteren Profil 50 aus Figur 3 ausgebildet ist.

Die gesamte Anordnung aus den elektrischen Leitungen 28, 52, 54 und den Profilen 42, 58, 60, 50 ist von einer Lage Fasermaterial 44 überdeckt.

In der Figur 5 ist als weiteres Ausführungsbeispiel ein Laminat gezeigt, in das eine elektrische Leitung 74 mit rechteckigem Querschnitt eingebettet ist. In diesem Fall weist die elektrische Leitung 74 eine ebene Seitenfläche 76 auf, an der ein Profil 78 angeordnet ist. Das Profil 78 hat den Querschnitt eines rechtwinkligen Dreiecks. An einer der Seitenfläche 76 gegenüber liegenden, weiteren Seitenfläche 80 der elektrischen Leitung 74 ist ein weiteres Profil 82 angeordnet. Die Anordnung aus der elektrischen Leitung 74 und den beiden Profilen 78, 82 liegt auf einer obersten, ebenen Materiallage 32 der Fasermateriallagen 30 auf und wird von einer Lage Fasermaterial 44 überdeckt.

Figur 6 veranschaulicht das im Stand der Technik bestehende Problem. Dargestellt ist eine elektrische Leitung 84 mit rechteckigem Querschnitt, die in ein Laminat eingebettet ist. Sie liegt auf einer Anzahl von Fasermateriallagen 86 auf. Außerdem wird sie von einer weiteren Fasermateriallage 88 überdeckt. Zwischen Seitenflächen 90, 92 der elektrischen Leitung 84 und der die elektrische Leitung 84 überdeckenden Fasermateriallage 88 haben sich bei der Fertigung des Laminats Hohlräume 94 gebildet.

### Liste der verwendeten Bezugszeichen:

- 10: Rotorblatt
- 12: Blattspitze
- 14: Blattwurzel
- 16: Oberschale
- 18: Unterschale
- 20: vorderer Steg
- 22: hinterer Steg
- 24: Profilnasenkante
- 26: Profilhinterkante
- 28: elektrische Leitung
- 30: untere Fasermateriallagen
- 32: Materiallage
- 34: Unterseite der elektrischen Leitung 28
- 36: Seitenfläche der elektrischen Leitung 28
- 38: weitere Seitenfläche der elektrischen Leitung 28
- 40: Oberseite der elektrischen Leitung 28
- 42: Profil
- 44: überdeckende Fasermateriallage
- 45: konkaver Abschnitt des Profils 42
- 46: untere Fläche des Profils 42
- 48: obere Fläche des Profils 42
- 50: weiteres Profil
- 52: weitere elektrische Leitung
- 54: weitere elektrische Leitung
- 56: konkaver Abschnitt des weiteren Profils 50
- 58: weiteres Profil
- 60: weiteres Profil
- 62: Seitenfläche der weiteren elektrischen Leitung 52
- 64: konkave Fläche des Profils 58
- 66: weitere konkave Fläche des Profils 58
- 68: weitere Seitenfläche der elektrischen Leitung 52
- 70: Seitenfläche der elektrischen Leitung 54
- 72: weitere Seitenfläche der elektrischen Leitung 54
- 74: elektrische Leitung
- 76: Seitenfläche der elektrischen Leitung 74
- 78: Profil
- 80: weitere Seitenfläche der elektrischen Leitung 74
- 82: weiteres Profil
- 84: elektrische Leitung
- 86: untere Fasermateriallagen
- 88: überdeckende Fasermateriallage
- 90: Seitenfläche der elektrischen Leitung 84
- 92: weitere Seitenfläche der elektrischen Leitung 84
- 94: Hohlraum oder Harznest

## Patentansprüche

1. Windenergieanlagenbauteil mit einem Laminat aus einem Fasermaterial und Kunststoff und einer in das Laminat eingebetteten elektrischen Leitung (28, 74), **dadurch gekennzeichnet, dass** an einer Seitenfläche (36) der elektrischen Leitung (28, 74) ein Profil (42) angeordnet ist, das im Querschnitt keil- oder rampenförmig ist und einer Bildung eines Hohlraums oder Kunststoffnests zwischen der Seitenfläche (36) und einer eine Oberseite (40) der elektrischen Leitung (28, 74) überdeckenden Fasermateriallage (44) bei der Fertigung des Laminats entgegenwirkt.

2. Windenergieanlagenbauteil nach Anspruch 1, **dadurch gekennzeichnet, dass** die elektrische Leitung (28, 74) eine Unterseite (34) aufweist, die an einer in einer Umgebung der elektrischen Leitung (28, 74) im Wesentlichen ebenen Materiallage (32) anliegt.

3. Windenergieanlagenbauteil nach Anspruch 1 oder 2, **dadurch gekennzeichnet, dass** das Profil (42) aus einem biegsamen Material besteht.

4. Windenergieanlagenbauteil nach einem der Ansprüche 1 bis 3, **dadurch gekennzeichnet, dass** das Profil (42) aus einem geschäumten Material besteht.

5. Windenergieanlagenbauteil nach einem der Ansprüche 1 bis 4, **dadurch gekennzeichnet, dass** das Profil (42) eine Höhe (a) von 50 % oder mehr einer Höhe (h) der elektrischen Leitung (28, 74) aufweist.

6. Windenergieanlagenbauteil nach einem der Ansprüche 1 bis 5, **dadurch gekennzeichnet, dass** die elektrische Leitung (28) im Querschnitt kreisförmig ist und das Profil (42) im Querschnitt einen konkaven Abschnitt (45) aufweist, der an die Seitenfläche (36) der elektrischen Leitung (28) angrenzt und dessen Krümmungsradius dem Radius der elektrischen Leitung (28) entspricht.

7. Windenergieanlagenbauteil nach einem der Ansprüche 1 bis 5, **dadurch gekennzeichnet, dass** die elektrische Leitung (74) einen rechteckigen Querschnitt aufweist und das Profil (78) im Querschnitt dreieckig ist.

8. Windenergieanlagenbauteil nach einem der Ansprüche 1 bis 7, **dadurch gekennzeichnet, dass** an einer der Seitenfläche (36) gegenüberliegenden weiteren Seitenfläche (78) der elektrischen Leitung (28) ein weiteres Profil (56) angeordnet ist, das einer Bildung eines Hohlraums oder Kunststoffnests zwischen der weiteren Seitenfläche (38) und der die Oberseite (40) überdeckenden Fasermateriallage (44) bei der Fertigung des Laminats entgegenwirkt.

9. Windenergieanlagenbauteil nach einem der Ansprüche 1 bis 8, **dadurch gekennzeichnet, dass** neben der elektrischen Leitung (28) mindestens eine weitere elektrische Leitung (52, 54) in das Laminat eingebettet ist, wobei zwischen zwei der elektrischen Leitungen (28, 52, 54) ein weiteres Profil (58, 60) angeordnet ist, das einer Bildung von Hohlräumen oder Kunststoffnestern zwischen diesen elektrischen Leitungen (28, 52, 54) und/oder zwischen einer dieser Leitungen (28, 52, 54) und einer die Oberseite (40) überdeckenden Fasermateriallage (44) bei der Fertigung des Laminats entgegenwirkt.

10. Windenergieanlagenbauteil nach Anspruch 9, **dadurch gekennzeichnet, dass** das weitere, zwischen den beiden elektrischen Leitungen (28, 52) angeordnete Profil (58) im Querschnitt zwei einander gegenüberliegende, konkav gekrümmte Seitenkanten (64, 66) aufweist.

11. Windenergieanlagenbauteil nach einem der Ansprüche 1 bis 10, **dadurch gekennzeichnet, dass** das Windenergieanlagenbauteil ein Rotorblatt (10) oder ein Teil eines Rotorblatts (10) ist.

12. Windenergieanlagenbauteil nach einem der Ansprüche 1 bis 11, **dadurch gekennzeichnet, dass** das Windenergienanlagenbauteil in einem Vakuum-Injektionsverfahren hergestellt worden ist.

13. Verfahren zur Herstellung eines Windenergieanlagenbauteils mit den folgenden Schritten:
• Einlegen einer Anzahl unterer Fasermateriallagen (30) in eine Form,
• Auflegen einer elektrischen Leitung auf eine Materiallage (32),
• Auflegen einer weiteren Fasermateriallage (44), die eine Oberseite (40) der elektrischen Leitung (28) überdeckt,
• Injizieren eines Kunststoffs in einem Vakuum-Injektionsveuahren,
• Aushärten des Kunststoffs und
• Entnehmen des Windenergieanlagenbauteils aus der Form, **dadurch gekennzeichnet, dass**
• vor dem Auflegen der weiteren Fasermateriallage (44), die die Oberseite (40) der elektrischen Leitung (28) überdeckt, und vor dem Injizieren des Kunststoffs neben einer Seitenfläche (36) der elektrischen Leitung (28) ein im Querschnitt keil- oder rampenförmiges Profil (42) auf die Materiallage (32) aufgelegt wird, das einer Bildung eines Hohlraums oder Kunststoffnests zwischen der Seitenfläche (36) und der Fasermateriallage (44) beim Injizieren und Aushärten des Kunststoffs entgegenwirkt.

## Claims

1. A wind turbine component having a laminate of fibrous material and plastic and an electrical line (28, 74) embedded in the laminate, **characterized in that**, a profile (42) is arranged on a lateral surface (36) of the electrical line (28, 74), which is wedge-shaped or ramp-shaped in cross-section and, during manufacture of the laminate, counteracts the formation of a hollow space or plastic nest between the lateral surface (36) and a fibrous material layer (44) which covers an upper side (40) of the electrical line (28, 74).

2. The wind turbine component according to claim 1, **characterized in that**, the electrical line (28, 74) has a lower side (34) which rests against an essentially planar material layer (32) in an area surrounding the electrical line (28, 74).

3. The wind turbine component according to one of the claims 1 to 2, **characterized in that**, the profile is made of a flexible material.

4. The wind turbine component according to one of the claims 1 to 3, **characterized in that**, the profile (42) is made of a foamed material.

5. The wind turbine component according to one of the claims 1 to 4, **characterized in that**, the profile (42) has a height (a) of 50% or more of a height (h) of the electrical line (28, 74).

6. The wind turbine component according to one of the claims 1 to 5, **characterized in that**, the electrical line (28) is circular in its cross-section and the profile (42), in cross-section has a concave section (45) which borders on the lateral surface (36) of the electrical line (28) and whose curvature radius corresponds to that of the electrical line (28).

7. The wind turbine component according to one of the claims 1 to 5, **characterized in that**, the electrical line (74) has a rectangular cross-section and the profile (78) is triangular in cross-section.

8. The wind turbine component according to one of the claims 1 to 7, **characterized in that**, a further profile (56) is arranged on a further lateral surface (78) of the electrical line (28) which lateral surface (78) lies adjacent to the lateral surface (36), the further profile (56), during the manufacture of the laminate, counteracts the formation of a hollow space or plastic nest between the further lateral surface (38) and the fibrous material layer which covers the upper side (40).

9. The wind turbine component according to one of the claims 1 to 8, **characterized in that**, in addition to the electrical line (28), at least one further electrical line (52, 54) is embedded in the laminate, wherein a further profile (58, 60) is arranged between two of the electrical lines (28, 52, 54) and the further profile (58, 60), during the manufacture of the laminate, counteracts the formation of hollow spaces or plastic nests between these electrical lines (28, 52, 54) and/or between one of these lines (28, 52, 54) and a fibrous material layer (44) which covers the upper side (40).

10. The wind turbine component according to claim 9, **characterized in that**, the further profile (58), which is arranged between the two electrical lines (28, 52), has two mutually adjacent concavely curved side edges (64, 66) in cross-section.

11. The wind turbine component according to one of the claims 1 to 10, **characterized in that**, the wind turbine component is a rotor blade (10) or a part of a rotor blade (10).

12. The wind turbine component according to one of the claims 1 to 11, **characterized in that**, the wind turbine component was manufactured in a vacuum injection process.

13. A method for manufacturing a wind turbine component having the following steps:
• inserting a number of bottom fibrous material layers (30) into a mold,
• placing an electrical line onto a material layer (32),
• applying a further fibrous material layer (44) which covers an upper side (40) of the electrical line (28),
• injecting a plastic in a vacuum-injection process,
• curing the plastic and
• removing the wind turbine component from the mold, **characterized in that**
• prior to the application of the further fibrous material layer (44), which covers the upper side (40) of the electrical line (28), and prior to the injection of the plastic, a profile (42), which is wedge-shaped or ramp-shaped in cross-section, is placed onto the material layer (32) next to a lateral surface (36) of the electrical line (28), the profile (42) counteracting a formation of a hollow space or a plastic nest between the lateral surface (36) and the further layer of fibrous material (44) during the injection and curing of the plastic.

## Revendications

1. Composant d'éolienne avec un stratifié en un matériau fibreux et une matière plastique et un câble électrique (28, 74) incorporé dans le stratifié, **caractérisé en ce qu'**un profilé (42) est disposé sur une surface latérale (36) du câble électrique (28, 74), profilé qui a une coupe transversale de forme conique ou en forme de rampe et s'oppose à la formation d'une cavité ou d'un nid en plastique entre la surface latérale (36) et une couche de matériau fibreux (44) couvrant une face supérieure (40) du câble électrique (28, 74) lors de la fabrication du stratifié.

2. Composant d'éolienne selon la revendication 1, **caractérisé en ce que** le câble électrique (28, 74) présente une face inférieure (34) adjacente à une couche de matériau (32) essentiellement plane située à proximité du câble électrique (28, 74).

3. Composant d'éolienne selon la revendication 1 ou 2, **caractérisé en ce que** le profilé (42) se compose d'un matériau flexible.

4. Composant d'éolienne selon l'une quelconque des revendications 1 à 3, **caractérisé en ce que** le profilé (42) se compose d'un matériau expansé.

5. Composant d'éolienne selon l'une quelconque des revendications 1 à 4, **caractérisé en ce que** le profilé (42) présente une hauteur (a) égale à au moins 50 % d'une hauteur (h) du câble électrique (28, 74).

6. Composant d'éolienne selon l'une quelconque des revendications 1 à 5, **caractérisé en ce que** le câble électrique (28) a une coupe transversale circulaire et le profilé (42) a une coupe transversale avec une section concave (45) adjacente à la surface latérale (36) du câble électrique (28) et dont le rayon de courbure correspond au rayon du câble électrique (28).

7. Composant d'éolienne selon l'une quelconque des revendications 1 à 5, **caractérisé en ce que** le câble électrique (74) présente une coupe transversale rectangulaire et le profilé (78) a une coupe transversale triangulaire.

8. Composant d'éolienne selon l'une quelconque des revendications 1 à 7, **caractérisé en ce qu'**un autre profilé (56) est disposé sur une autre surface latérale (78) opposée à la surface latérale (36) du câble électrique (28, 28), profilé qui s'oppose à la formation d'une cavité ou d'un nid en plastique entre l'autre surface latérale (38) et la couche de matériau fibreux (44) couvrant une face supérieure (40) lors de la fabrication du stratifié.

9. Composant d'éolienne selon l'une quelconque des revendications 1 à 8, **caractérisé en ce que**, en plus du câble électrique (28), au moins un autre câble électrique (52, 54) est incorporé dans le stratifié, dans lequel est disposé entre deux des câbles électriques (28, 52, 54) un autre profilé (58, 60) qui s'oppose à la formation de cavités ou de nids en plastique entre ces câbles électriques (28, 52, 54) et/ou entre un de ces câbles (28, 52, 54) et une couche de matériau fibreux (44) qui recouvre la face supérieure (40) lors de la fabrication du stratifié.

10. Composant d'éolienne selon la revendication 9, **caractérisé en ce que** l'autre profilé (58) disposé entre les deux câbles électriques (28, 52) présente en coupe transversale deux arêtes latérales (64, 66) concaves situées l'une en face de l'autre.

11. Composant d'éolienne selon l'une quelconque des revendications 1 à 10, **caractérisé en ce que** le composant d'éolienne et une pale de rotor (10) ou une partie d'une pale de rotor (10).

12. Composant d'éolienne selon l'une quelconque des revendications 1 à 11, **caractérisé en ce que** le composant d'éolienne a été fabriqué dans un procédé d'injection sous vide.

13. Procédé de fabrication d'un composant d'éolienne avec les étapes suivantes :
• insertion d'un certain nombre de couches de matériau fibreux inférieures (30) dans un moule,
• pose d'un câble électrique sur une couche de matériau (32),
• pose d'une autre couche de matériau fibreux (44) qui recouvre une face supérieure (40) du câble électrique (28),
• injection d'une matière plastique dans un procédé d'injection sous vide,
• durcissement de la matière plastique et
• extraction du composant d'éolienne du moule, **caractérisé en ce que**
• avant la pose de l'autre couche de matériau fibreux (44) qui recouvre la face supérieure (40) du câble électrique (28), et avant l'injection de la matière plastique à côté d'une surface latérale (36) du câble électrique (28), un profilé (42) dont la coupe transversale a une forme conique ou est en forme de rampe est posé sur la couche de matériau (32), profilé qui s'oppose à la formation d'une cavité ou d'un nid en plastique entre la surface latérale (36) et la couche de matériau fibreux (44) lors de l'injection et du durcissement de la matière plastique.
